# EUROPÄISCHE PATENTSCHRIFT

(11) **EP 0 775 095 B1**
(45) Veröffentlichungstag und Bekanntmachung des Hinweises auf die Patenterteilung: **05.01.2000**
(21) Anmeldenummer: 95928413.4
(22) Anmeldetag: 04.08.1995
(51) Int. Cl.: C03C 17/32

(54) **VERFAHREN ZUR HERSTELLUNG VON FARBBESCHICHTETEN FLÄCHIGEN GLASKÖRPERN, FLÄCHIGE GLASKÖRPER UND GLASVERBUNDE**
PROCESS FOR PRODUCING FLAT GLASS ARTICLES WITH COLOURED COATINGS, FLAT GLASS ARTICLES AND COMPOSITE GLASS ARTICLES
PROCEDE DE FABRICATION D'ARTICLES EN VERRE PLATS REVETUS DE PEINTURE, ARTICLES EN VERRE PLATS ET ARTICLES EN VERRE COMPOSITE

(30) Priorität: 05.08.1994 DE 4428861
(43) Veröffentlichungstag der Anmeldung: 28.05.1997
(73) Patentinhaber: WURSTER Oberflächentechnik GmbH, 71691 Freiberg (DE)
(72) Erfinder: RUDOLPH, Michael, D-13403 Berlin (DE); STEINER, Thomas, D-12359 Berlin (DE); JOHNEN, Norbert, D-10999 Berlin (DE)
(74) Vertreter: Gulde, Klaus W., Dipl.-Chem.
(86) Internationale Anmeldenummer: DE9501055
(87) Internationale Veröffentlichungsnummer: WO9604215

(56) Entgegenhaltungen:
- DE-A- 2 517 504
- GB-A- 2 055 853
- US-A- 4 256 232
- CHEMICAL ABSTRACTS, vol. 107, no. 26, 28.Dezember 1987 Columbus, Ohio, US; abstract no. 241425, Seite 294; & CS,A,236 642 (A.MORAVCIK) 15.November 1987
- DATABASE WPI Week 25 Derwent Publications Ltd., London, GB; AN 81-45245 & JP,A,56 021 737 (NIPPON SHEET GLASS KK) , 21.Mai 1981
- DATABASE WPI Week 30 Derwent Publications Ltd., London, GB; AN 79-55301 & JP,A,54 074 819 (NISSHO KK) , 15.Juni 1979

## Beschreibung

Die Erfindung betrifft ein Verfahren zur Herstellung von dekorativen, farbbeschichteten, flächigen Glaskörpern, deren Dekor durch das Glas hindurch erkennbar ist, und flächige, farbbeschichtete Glaskörper und Glasverbundkörper.

Flächige Glaskörper mit farbigen Beschichtungen zu versehen ist bekannt. So ist es möglich, auf Wirtschaftsglas farbige oder auch farblose Glasschichten und Dekore mittels Pulverflammspritzverfahren aufzutragen. Hierbei werden farbige oder farblose Glasfritten geeigneter Körnung mit Hilfe von Pulverflammspritzgeräten auf das heiße Glas aufgebracht. Zum Erzielen von Dekoren können Schablonen oder Abdeckmasken verwendet werden. Für spezielle dekorative Effekte kann der Anteil nicht aufschmelzender Bestandteile erhöht werden. Das Mischen von Farben und variierte Schichtdicken gestatten eine nahezu unbegrenzte Farbpalette.

Dieses Auftragverfahren ist mit einigen Nachteilen behaftet. Es muß darauf geachtet werden, daß der Ausdehnungskoeffizient der gespritzten Schicht niedriger als der des Untergrundes ist, damit keine Spannungen auftreten können. Der Energieaufwand beim Pulverflammspritzverfahren ist beträchtlich, da das Glas auf höhere Temperaturen, die in den Schmelzbereich des Glases hineinreichen, hoch geheizt werden muß. Das Nachbearbeiten dieser auf diese Weise hergestellten Beschichtungen mittels Graviertechniken ist kaum möglich, so daß ein weiteres dekoratives Bearbeiten der Beschichtung in der Regel nicht durchführbar ist. Nachteiligerweise entsteht diese Art der dekorativen Beschichtung des Dekors nur bei der Betrachtung der Auftragsseite, nicht jedoch beim Betrachten durch die Glasfläche hindurch.

Eine weitere, weitverbreitete Methode, Glasflächen mit Farbbeschichtungen zu versehen, besteht in der Anwendung von sogenannten Naßlacken. Hierbei wird der lösungsmittelenthaltende Farblack auf die Glasfläche aufgetragen. Die nach dem Trocknen entstehende Beschichtung ist sowohl durch die Glasfläche hindurch, als auch von der beschichteten Seite her zu betrachten und auch mit entsprechenden Farbdekors zu versehen.

Ein entscheidender Nachteil bei mit Naßlack beschichteten Glasflächen besteht darin, daß die Farblackschicht eine relativ geringe Haftung auf der Glasfläche zeigt. Bei mechanischer Einwirkung lösen sich oftmals die Lackschichten. Bei der Anwendung von Gravurtechniken zum Einbringen weiterer Dekors treten insbesondere an den Gravurrändern unregelmäßige abgerissene Kanten auf, die auf die geringe Haftfähigkeit der Lackschicht auf der Glasoberfläche hindeuten.

In der EP 16265 ist ein Verfahren zum Beschichten eines Glasbehälters angegeben das zum Ziel hat, das Zerstreuen von Glasbruchstücken beim Bruch des Behälters zu verhindern oder zu verringern. Hierbei wird auf den vorerhitzten Glasbehälter eine Pulvermasse aufgetragen, die durch eine weitere Hitzebehandlung des Behälters geschmolzen wird und dann in einem glatten, geschmolzenen Überzug auf der Glasfläche bildet. Anschließend wird der so beschichtete Behälter auf die Umgebungstemperatur abgekühlt. Die mit diesem Verfahren aufgebrachte thermoplastische Pulvermasse ergibt zwar einen gut haftenden und stabilen Überzug, er eignet sich jedoch nicht dazu, eine dekorative Beschichtung zu erzeugen, die durch die Glasfläche hindurch sichtbar ist. Auch beim Aufbringen duroplastischer Pulverlacke, beispielsweise mittels eines elektrostatischen Beschichtungsverfahrens, führt immer noch zu einer Schicht, die zwar dekorativ ist, aber nur von der Auftragsseite her betrachtet werden kann.

Das Pulverlackieren ist eine ausgereifte Technik, insbesondere für industrielle Oberflächenbeschichtungen. Das hierbei zur Verarbeitung kommende Lackpulver ist ein Kunststoffpulver mit eingebautem Härter auf der Basis von Duroplasten. Es ist lösungsmittelfrei und ist unter ökologischer Betrachtung ein ausgesprochen umweltfreundliches Beschichtungsmaterial. Den elektrostatischen Auftragsverfahren ist gemeinsam, daß das Pulver auf einen geerdeten, kalten Grundwerkstoff aufgetragen wird. Die Pulverpartikel haften aufgrund ihrer elektrostatischen Aufladung am Grundwerkstoff. Bei einer sich anschließenden Temperaturbehandlung härtet der Kunststoff aus und bildet von der Auftragsseite her gesehen ein dekoratives Oberflächenbild.

Die Pulverlackbeschichtung hat viele Vorteile. So wird beispielsweise das Lackmaterial nahezu hundertprozentig ausgenutzt, und es enthält keine Lösungsmittel. Infolge der Möglichkeit, nicht am Werkstoff haften gebliebenes Pulver zurückzugewinnen, entstehen auch keine Spritzverluste. In den Einbrennöfen entwickeln sich relativ geringe Mengen an Abgasen, daher kann die Luftführung in den Öfen einfach sein. Weiterhin erfüllen die Pulverlacke die wichtige Forderung, daß die ins Freie geführten, relativ geringen Abfallmengen der Einbrennöfen keine umweltschädigenden Stoffe enthalten. Der Automatisierungsgrad bei dieser Art des Auftragen von Farbschichten ist sehr hoch.

Nachteilig jedoch ist an dem bekannten Verfahren, daß es bisher noch nicht gelungen ist, auf Glasflächen Pulverlackbeschichtungen, die gegebenenfalls auch Gravierungen in der Beschichtung und/oder im Glas enthalten, durchzuführen, deren dekorative Ansicht von der der Beschichtungsseite der Glasfläche gegenüberliegenden Sichtseite erkennbar ist, sowie flächige Glaskörper herzustellen, die als dekorative und Wetter- und UV-beständige Wandverkleidungen geeignet sind.

Aufgabe der Erfindung ist es nun, Glasflächen so zu beschichten, daß ein fest haftender, dekorativer Überzug entsteht, dessen Dekor durch die Sichtfläche der Glasfläche hindurch erscheint und der mittels Gravurtechnik bearbeitbar ist, sowie flächige Glaskörper herzustellen, die als dekorative und Wetter- und UV-beständige Wandverkleidungen geeignet sind.

Die Lösung der Aufgabe erfolgt mit einem Verfahren gemäß dem kennzeichnenden Teil des Hauptanspruches und mit flächigen Glaskörpern gemäß der Ansprüche 16, 20 und 24

Es hat sich überraschenderweise gezeigt, daß beim Auftragen von duroplastischen Pulverlacken auf horizontal angeordneten Glasflächen und den daran sich anschließenden, an sich bekannten Einbrennprozeß das Dekor sich nicht auf der Beschichtungsseite ausbildet, sondern der eigentliche ästhetische Eindruck durch die Glasfläche hindurch sichtbar ist. Der hierbei entstehende Überzug läßt sich hervorragend mittels Gravurtechniken bearbeiten und ermöglicht es dadurch zusätzliche, durch die Glasfläche hindurch erkennbare Dekorelemente einzubringen.

Das Anordnen einer Glasfläche vor einer dekorativen Pulverlackbeschichtung hat bezüglich der Wetter- und UV-Beständigkeit, insbesondere bei der Verwendung im Außenbereich, außerordentlich große Vorteile, da einige Pulverlackmischungen unter der Einwirkung insbesondere von UV-Strahlen zum Kreiden neigen.

Das erfindungsgemäße Verfahren und die flächigen Glaskörper zeichnen sich durch weitere Vorteile aus:
- Eine bestimmte Korngrößenverteilung im Pulverlack ist nicht erforderlich.
- Bei der Glasbeschichtung können auch Kleinstgrößen, die beim üblichen Pulverlackverfahren nicht verwendet werden können, angewendet werden.
- Weiterhin können Pulverlackreste eingesetzt werden, die beim üblichen Pulverlackauftragsverfahren als Abfall anfallen, so daß eine nahezu 100%-ige Verwertung von Pulverlacken möglich ist.
- Ein sogenanntes Nachpulvern ist unproblematisch, so daß mittels des erfindungsgemäßen Verfahrens ein punktuelles Beschichten des flächigen Glaskörpers möglich wird.
- Die Sicherheitseigenschaften von flächigen Glaskörpern werden durch den Auftrag eines Pulverlackes gemäß des erfindungsgemäßen Verfahrens bedeutend verbessert. Die auf diese Weise beschichteten Gläser splittern nicht.
- Die zu beschichtenden Glasflächen können im kalten Zustand mit dem Pulverlack beschichtet werden.
- Das Anlegen eines elektrostatischen Feldes ist nicht zwingend notwendig. Das erfindungsgemäße Verfahren erlaubt es jedoch auch unter Anlegung eines elektrischen Feldes, eine Pulverbeschichtung durchzuführen.

Vorteilhafte Ausgestaltungen des erfindungsgemäßen Verfahrens sind in den Ansprüchen 2 bis 15 angegeben.

Die Weiterbildungen der Ansprüche 2 und 3 machen es vorteilhafterweise möglich Glasverbunde herzustellen, bei denen zwischen zwei flächigen Glaskörpern eine Pulverlackschicht angeordnet ist. Diese Pulverlackbeschichtung kann auf unterschiedliche Weise dekorativ gestaltet werden, sodaß im Ergebnis ein Glasverbundkörper entsteht, der sich für die verschiedensten Anwendungen im Baubereich für die Wand- und Fassadengestaltung eignet.

Den flächigen Glaskörper vor der Beschichtung mit Pulverlack auf eine bestimmte Temperatur zu bringen, wie es in den Ausgestaltungen der Ansprüche 4 und 5 ausgesagt ist, ermöglicht es insbesondere, den aufgetragenen Pulverlack in der pulverisierten Form zu belassen bzw. ihn durch Temperaturerhöhung zu gelieren, um damit Möglichkeiten des weiteren Auftragens von Pulverlacken zu schaffen bzw. durch Bearbeitung des Pulvers bzw. der gelierten Form weitere besondere dekorative Effekte zu erzielen.

Die Ausgestaltungen der Ansprüche 8 bis 11 ermöglichen es, die Pulverlackbeschichtung von Glasflächen auch unter Einwirkung eines elektrostatischen Feldes durchzuführen. Da Glas ein elektrischer Nichtleiter ist, ist es erforderlich, zusätzliche Maßnahmen zu ergreifen, daß eine Wirkung des elektrischen Feldes durch die Glasfläche hindurch erfolgt. Erfindungsgemäß wird das erreicht mit der Weiterbildung des Anspruches 10, in der auf der Sichtseite des flächigen Glaskörpers, nämlich der Seite, die der Beschichtungsseite gegenüberliegt, eine elektrisch leitende Metallfolie aufgebracht wird, die wieder entfernbar ist und gemäß der Weiterbildung des Anspruchs 11 wird auf der Sichtseite der Glasfläche ein wasserlöslicher elektrisch leitender Farblack aufgebracht. Sowohl die aufgebrachte Metallfolie als auch der wasserlösliche, elektrischleitende Lack übernimmt gleichzeitig die Funktion einer Schutzschicht für die Sichtseite der Glasflächen.

Die Ausgestaltung gemäß Anspruch 12 erlaubt es, zusätzliche dekorative Elemente in den Pulverlack einzubringen bzw. vor dem Auftragen des Pulverlackes auf die Glasfläche, diese entsprechend den Vorstellungen für das zu erwartende Dekor aufzutragen.

Die Weiterbildung gemäß Anspruch 13 erlaubt es, sehr dünne Glasflächen dem erfindungsgemäßen Verfahren zu unterwerfen, wobei aufgrund der geringen Dicke der Glasfläche, z.B. unter 1 mm, die Pulverbeschichtung auch im elektrostatischen Feld durchgeführt werden kann. Diese dünne, beschichtete Glasfläche kann dann mit weiteren Glasflächen glasseitig zu dickeren und damit stabileren Glaskörpern verbunden werden.

Die Ausgestaltung gemäß Anspruch 14 erlaubt es vorteilhafterweise auch organisches Glas dem erfindungsgemäßes Verfahren zu unterwerten.

Die Oberfläche des Glases kann sehr unterschiedlich strukturiert sein, um besondere dekorative Effekte zu erzielen.

Auch transparent gefärbte Gläser lassen sich sehr vorteilhaft nach dem erfindungsgemäßen Verfahren beschichten. Die erfindungsgemäßen flächigen Glaskörper lassen sich auch aufgrund ihres künstlerischen Anspruches und ihrer Wetterbeständigkeit und UV-Beständigkeit im dekorativen Fassadenbau repräsentativer Objekte sowohl im Innenbereich als auch im Außenbereich einsetzen. Insbesondere der Einsatz der flächigen Glas-Pulver-Glas-Verbundkörper im dekorativen Fassadenbau für Banken und Versicherungen, für öffentliche Einrichtungen wie Telefonzellen, Buswartehäuschen, für rahmenlose Türen, für Trennwandsysteme im privaten Bereich oder im Bürobereich, als exklusive Naßbereichtrennwände wie bei Duschkabinen oder auch als exklusive Glastische, stellt eine außerordentlich vorteilhafte Anwendung der erfindungsgemäßen Verbunde und auch der einseitig beschichteten flächigen Glaskörper dar.

Das Auftragen des Pulverlacks auf die gelagerte Glasfläche kann ohne weiteres mit den üblichen Pulverhandpistolen erfolgen. Sollte im elektrostatischen Feld beschichtet werden, ist es natürlich erforderlich, daß die Handpistole einen Prallkegel hat und daß die Pulverlackzusammensetzung den üblichen Vorschriften für die Teilchengrößenverteilung entsprechen. Bei der Beschichtung ohne elektrischem Feld wird der Prallkegel vorteilhafterweise von der Handpistole entfernt. Der Pulverlack setzt sich dann der Schwerkraft folgend auf die Beschichtungsseite der Glasfläche nieder. Es ist auch ohne weiteres möglich, den Pulverlack auf die Beschichtungsseite zu schütten und anschließend mit entsprechenden Spachteln zu verteilen. Nach dem Auflegen des Pulvers und der Beurteilung des zu entstehenden Dekors wird die gesamte Glasfläche in einem Einbrennofen bei Temperaturen zwischen 150 und 200 °C gebrannt. Die Einbrenndauer beträgt etwa 10 bis 20 min bei 200°C. Nach dem Abkühlen der Glasfläche ist von der Sichtseite her das Dekor ausgezeichnet zu erkennen, während auf der Beschichtungsseite der Glasfläche der eingebrannte Pulverlack einen wenig dekorativen Eindruck macht.

Die Herstellung der flächigen Glas-Pulverlack-Glas-Verbundkörper erfolgt durch Beschichtung einer Glasfläche und anschließendem Auflegen einer zweiten Glasscheibe auf die beschichtete Seite. Der Einbrennprozeß wird im Anschluß daran durchgeführt. Je nach gefordertem Dekor oder auch gewünschter Splitter- und Bruchsicherheit der flächigen Glaskörper bzw. der Verbunde kann die Beschichtungsdicke und die Zusammensetzung des Pulverlackes variiert werden.

## Patentansprüche

1. Verfahren zur Herstellung von farbbeschichteten, flächigen Glaskörpern, deren Dekor durch das Glas hindurch erkennbar ist,
gekennzeichnet dadurch,
daß der flächige Glaskörper, der eine Sichtseite und eine Beschichtungsseite aufweist, mit seiner Sichtseite auf einer Stützfläche in horizontaler Lage aufgelegt wird, anschließend eine duroplastische Pulverlackmischung auf die Beschichtungsseite aufgebracht wird und danach einen an sich bekannten Einbrennprozeß unterzogen wird.

2. Verfahren nach Anspruch 1,
gekennzeichnet dadurch,
daß auf die mit Pulverlack beschichtete Seite vor dem Einbrennprozeß ein weiterer, unbeschichteter, flächiger Glaskörper aufgelegt wird und der Verbund Glas-Pulverlack-Glas anschließend einem Einbrennprozeß unterzogen wird.

3. Verfahren nach Anspruch 1 oder 2,
gekennzeichnet dadurch,
daß zwei einseitig beschichtete flächige Glaskörper aufeinander gelegt werden und anschließend einem Einbrennprozeß unterzogen werden.

4. Verfahren nach einem der Ansprüche 1 bis 3,
gekennzeichnet dadurch,
daß die flächigen Glaskörper während des Aufbringes des Pulverlackes auf eine Temperatur unter 60°C eingestellt werden.

5. Verfahren nach einem der Ansprüche 1 bis 3,
gekennzeichnet dadurch,
daß die Glasflächen während des Aufbringens des Pulverlackes auf eine Temperatur zwischen 80°C und 250°C eingestellt werden.

6. Verfahren nach einem der Ansprüche 1 bis 5,
gekennzeichnet dadurch,
daß der Pulverlack mehrschichtig aufgetragen wird, wobei gegebenenfalls zwischen zwei Auftragungen eine Temperaturbehandlung durchgeführt wird.

7. Verfahren nach einem der Ansprüche 1 bis 6,
gekennzeichnet dadurch,
daß durch mechanische Behandlung oder mittels elektrischer Felder dekorative Effekte während oder nach dem Pulverlackauftrag erzeugt werden.

8. Verfahren nach einem der Ansprüche 1 bis 7,
gekennzeichnet dadurch,
daß der flächige Glaskörper während des Pulverlackbeschichtungsprozesses auf einer elektrisch leitenden Stützfläche gelagert ist und gleichzeitig der Wirkung eines elektrostatischen Feldes ausgesetzt wird.

9. Verfahren nach einem der Ansprüche 1 bis 8,
gekennzeichnet dadurch,
daß auf der Sichtseite des flächigen Glaskörpers eine entfernbare, elektrisch leitende Schicht aufgebracht wird.

10. Verfahren nach einem der Ansprüche 1 bis 9,
gekennzeichnet dadurch,
daß auf der Sichtseite eine Metallfolie entfernbar angebracht wird.

11. Verfahren nach einem der Ansprüche 1 bis 10,
gekennzeichnet dadurch,
daß auf der Sichtseite des flächigen Glaskörpers ein wasserlöslicher, elektrisch leitender Farblack aufgebracht wird.

12. Verfahren nach einem der Ansprüche 1 bis 11,
gekennzeichnet dadurch,
daß im Pulverlack zusätztlich Farb- und/oder Glimmerteilchen eingelagert werden und/oder Farb-und/oder Glimmerteilchen vor dem Auftragen des Pulverlackes auf die Beschichtungsseite des flächigen Glaskörpers aufgetragen werden.

13. Verfahren nach einem der Ansprüche 1 bis 12,
gekennzeichnet dadurch,
daß als zu beschichtender, flächiger Glaskörper ein flächiger Glaskörper mit geringer Dicke eingesetzt wird, der nach der Beschichtung und dem sich daran anschließenden Einbrennprozeß mit einem weiteren, unbeschichteten, flächigen Glaskörper glasseitig durchsichtig verbunden wird.

14. Verfahren nach einem der Ansprüche 1 bis 13,
gekennzeichnet dadurch,
daß als Glas anorganisches und/oder organisches Glas verwendet wird.

15. Verfahren nach einem der Ansprüche 1 bis 14,
gekennzeichnet dadurch,
daß die Pulverlackbeschichtung nicht vollflächig erfolgt.

16. Flächiger, farbbeschichteter Glaskörper, bestehend aus einer Glasfläche und einer dekorativen, vernetzten, duroplastischen Pulverlackbeschichtung, wobei das Dekor durch das Glas erkennbar ist

17. Flächiger, farbbeschichteter Glaskörper nach Anspruch 16,
gekennzeichnet dadurch,
daß die Glasfläche aus zwei durchsichtig verbundenen Glasflächen besteht.

18. Flachiger, farbbeschichteter Glaskörper nach Anspruch 16 oder 17,
gekennzeichnet dadurch,
daß die Pulverlackbeschichtung vollflächig ausgebildet ist.

19. Flächiger, farbbeschichteter Glaskörper nach Anspruch 16 oder 17,
gekennzeichnet dadurch,
daß die Pulverlackbeschichtung nicht vollflächig ausgebildet ist.

20. Flächiger, farbbeschichteter Glasverbundkörper, bestehend aus zwei flächigen Glaskörpern und einer zwischen ihnen angeordneten, vernetzten, duroplastischen Pulverlackbeschichtung, wobei mindestens durch das Glas eines flächigen Glaskörpers ein Dekor erkennbar ist.

21. Flächiger, farbbeschichteter Glasverbundkörper nach Anspruch 20,
gekennzeichnet dadurch,
daß die vernetzte Pulverlackbeschichtung vollflächig ausgebildet ist.

22. Flächiger, farbbeschichteter Glasverbundkörper nach Anspruch 20,
gekennzeichnet dadurch,
daß die vernetzte Pulverlackbeschichtung nicht vollflächig ausgebildet ist.

23. Flächiger, farbbeschichteter Glas- oder Glasverbundkörper nach einem der Ansprüche 16 bis 22,
gekennzeichnet dadurch,
daß das Glas anorganisches und/oder organisches Glas ist.

24. Verwendung der flächigen, mit duroplastischen Pulverlacken beschichteten Glaskörper bzw. Glasverbundkörper gemäß der Ansprüche 16 und 20 als flächige Wand- und Fassadenelemente sowohl für den Außenbereich als auch für den Innenbereich.

## Claims

1. A process for the production of color-coated flat glass articles, the decoration of which can be seen through the glass, characterized in that the flat glass article, which has a viewing side and a coating side, is placed in horizontal position with its viewing side on a support surface, a thermosetting coating powder blend is subsequently applied onto the coating side and thereafter subjected to a per se known baking process.

2. The process according to claim 1, characterized in that prior to the baking process, another uncoated flat glass article is placed onto the side coated with coating powder and subsequently, this composite of glass/coating powder/glass is subjected to a baking process.

3. The process according to claim 1 or 2, characterized in that two one-side coated flat glass articles are arranged on each other and subsequently subjected to a baking process.

4. The process according to one of claims 1 through 3, characterized in that the flat glass articles are adjusted to a temperature of below 60°C during the application of the coating powder.

5. The process according to one of claims 1 through 3, characterized in that the glass surfaces are adjusted to a temperature of between 80°C and 250°C during the application of the coating powder.

6. The process according to one of claims 1 through 5, characterized in that the powder coating is applied in multiple layers, with a temperature treatment being performed between two coatings.

7. The process according to one of claims 1 through 6, characterized in that during or after applying the powder coating, decorative effects are created using mechanical treatment or electrical fields.

8. The process according to one of claims 1 through 7, characterized in that during the process of applying the powder coating, the flat glass article is secured on an electrically conductive supporting surface and simultaneously subjected to the action of an electrostatic field.

9. The process according to one of claims 1 through 8, characterized in that a removable, electrically conductive layer is coated onto the viewing side of the flat glass article.

10. The process according to one of claims 1 through 9, characterized in that a removable metal foil is attached to the viewing side.

11. The process according to one of claims 1 through 10, characterized in that a water-soluble, electrically conductive colored lacquer is coated onto the viewing side of the flat glass article.

12. The process according to one of claims 1 through 11, characterized in that pigment and/or mica particles are additionally incorporated into the coating powder and/or pigment and/or mica particles are applied before applying the coating powder onto the coating side of the flat glass article.

13. The process according to one of claims 1 through 12, characterized in that a flat glass article of small thickness is used as the flat glass article to be coated which, after coating and the subsequent baking process, is transparently bonded to another uncoated flat glass article at the glass side.

14. The process according to one of claims 1 through 13, characterized in that inorganic and/or organic glass is used as glass.

15. The process according to one of claims 1 through 14, characterized in that the powder coating is not effected over the entire area.

16. A flat color-coated glass article, consisting of a glass surface and a decorative crosslinked thermosetting powder coating, wherein the decoration can be seen through the glass.

17. The flat color-coated glass article according to claim 16, characterized in that the glass surface consists of two transparently bonded glass surfaces.

18. The flat color-coated glass article according to claim 16 or 17, characterized in that the powder coating is formed over the entire area.

19. The flat color-coated glass article according to claim 16 or 17, characterized in that the powder coating is not formed over the entire area.

20. A flat color-coated glass composite article, consisting of two flat glass articles and a crosslinked thermosetting powder coating arranged between them, with a decoration being recognizable through the glass of at least one flat glass article.

21. The flat color-coated glass composite article according to claim 20, characterized in that the crosslinked powder coating is formed over the entire area.

22. The flat color-coated glass composite article according to claim 20, characterized in that the crosslinked powder coating is not formed over the entire area.

23. The flat color-coated glass article or glass composite article according to one of claims 16 through 22, characterized in that the glass is inorganic and/or organic glass.

24. Use of the flat glass articles and/or glass composite articles according to claims 16 and 20, which are coated with thermosetting powder coatings, as flat wall and facade elements for both indoor and outdoor use.

## Revendications

1. Procédé de fabrication de corps en verre plats à couchage de couleur, dont le décor apparaît par transparence à travers le verre,
**caractérisé en ce que**
le corps en verre plat à couchage de couleur présentant une face visible et une face de couchage est placé par sa face visible en position horizontale sur une surface d'appui, un mélange de laque en poudre thermodurcissable étant ensuite appliqué sur la face de couchage avant d'être soumis à un procédé de cuisson connu en soi.

2. Procédé selon revendication 1,
**caractérisé en ce que**
un autre corps en verre plat, non couché, est appliqué sur la face couchée de laque en poudre avant le procédé de cuisson et que le corps composé verre - laque en poudre - verre est ensuite soumis à un procédé de cuisson.

3. Procédé selon revendication 1 ou 2,
**caractérisé en ce que**
deux corps en verre plats couchés sur une face sont appliqués l'un sur l'autre avant d'être soumis à un procédé de cuisson.

4. Procédé selon l'une des revendications 1 à 3,
**caractérisé en ce que**
les corps en verre plats sont portés à une température inférieure à 60° C pendant l'application de la laque en poudre.

5. Procédé selon l'une des revendications 1 à 3,
**caractérisé en ce que**
les surfaces en verre sont portées à une température comprise entre 80 °C et 250 °C pendant l'application de la laque en poudre.

6. Procédé selon l'une des revendications 1 à 5,
**caractérisé en ce que**
la laque en poudre est appliquée en plusieurs couches, un traitement thermique étant exécuté entre deux applications le cas échéant.

7. Procédé selon l'une des revendications 1 à 6,
**caractérisé en ce que**
des effets de décor sont produits par traitement mécanique ou par des champs électriques pendant ou après application de la laque en poudre.

8. Procédé selon l'une des revendications 1 à 7,
**caractérisé en ce que**
le corps en verre plat est placé sur une surface d'appui conductrice pendant le processus de couchage de laque en poudre, tout en étant simultanément exposé à l'action d'un champ électrostatique.

9. Procédé selon l'une des revendications 1 à 8,
**caractérisé en ce qu'**
une couche conductrice pouvant être retirée est appliquée sur la face visible du corps en verre plat.

10. Procédé selon l'une des revendications 1 à 9,
**caractérisé en ce qu'**
une feuille métallique est appliquée sur la face visible, de manière à pouvoir être retirée.

11. Procédé selon l'une des revendications 1 à 10,
**caractérisé en ce qu'**
une laque de couleur soluble à l'eau et conductrice est appliquée sur la face visible du corps en verre plat.

12. Procédé selon l'une des revendications 1 à 11,
**caractérisé en ce que**
des particules de couleur et/ou micacés sont additionnées à la laque en poudre et/ou en ce que des particules de couleur et/ou micacés sont appliquées avant l'application de la laque en poudre sur la face de couchage du corps en verre plat.

13. Procédé selon l'une des revendications 1 à 12,
**caractérisé en ce qu'**
un corps en verre plat de faible épaisseur est employé comme corps en verre plat à coucher, lequel, après couchage et processus de cuisson consécutif, est joint à un autre corps en verre plat non couché de manière à être transparent côté verre.

14. Procédé selon l'une des revendications 1 à 13,
**caractérisé en ce que**
le verre employé est du verre inorganique et/ou organique.

15. Procédé selon l'une des revendications 1 à 14,
**caractérisé en ce que**
le couchage par laque en poudre n'est pas effectué sur toute la surface.

16. Corps en verre plat à couchage de couleur, consistant en une surface en verre et un couchage décoratif et réticulé de laque en poudre thermodurcissable, le décor apparaissant à travers le verre.

17. Corps en verre plat à couchage de couleur selon revendication 16,
**caractérisé en ce que**
la surface en verre consiste en deux surfaces en verre jointes de manière à être transparentes.

18. Corps en verre plat à couchage de couleur selon revendication 16 ou 17,
**caractérisé en ce que**
le couchage de laque en poudre couvre toute la surface.

19. Corps en verre plat à couchage de couleur selon revendication 16 ou 17,
**caractérisé en ce que**
le couchage de laque en poudre ne couvre pas toute la surface.

20. Corps composé en verre plat à couchage de couleur, consistant en deux corps en verre plats et un couchage réticulé de laque en poudre thermodurcissable disposé entre ceux-ci, un décor apparaissant à travers le verre d'un corps en verre plat au moins.

21. Corps composé en verre plat à couchage de couleur selon revendication 20,
**caractérisé en ce que**
le couchage réticulé de laque en poudre couvre toute la surface.

22. Corps composé en verre plat à couchage de couleur selon revendication 20,
**caractérisé en ce que**
le couchage réticulé de laque en poudre ne couvre pas toute la surface.

23. Corps ou corps composé en verre plat à couchage de couleur selon l'une des revendications 16 à 22,
**caractérisé en ce que**
le verre employé est du verre inorganique et/ou organique.

24. Application des corps ou corps composés en verre plats à couchage de laque thermodurcissable selon les revendications 16 et 20 comme éléments plans de cloison ou de façade, tant à l'extérieur qu'à l'intérieur.
